(19) Europäisches Patentamt
European Patent Office
Office européen des brevets

(11) Publication number: **0 141 873**
**A1**

(12) **EUROPEAN PATENT APPLICATION**

(21) Application number: **83111382.4**

(22) Date of filing: **14.11.83**

(51) Int. Cl.⁴: **C 07 C 143/56**, A 01 N 41/00

(43) Date of publication of application: **22.05.85**
**Bulletin 85/21**

(84) Designated Contracting States: **BE DE FR GB IT**

(71) Applicant: **GAF CORPORATION, 140 West 51st Street, New York New York 10020 (US)**

(72) Inventor: **Liu, Kou-Chang, II Drayton Avenue, Wayne New Jersey 07470 (US)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

(54) **Substituted diphenyl ether herbicides and process for use.**

(57) This invention relates to substituted diphenyl ethers having selective herbicidal properties and having the formula:

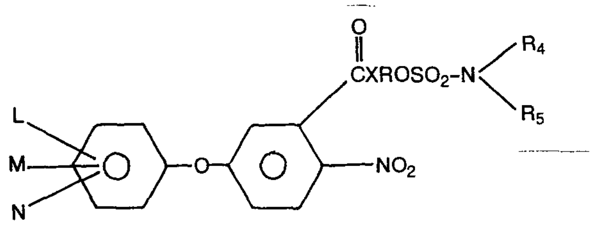

wherein R is a saturated or unsaturated, straight chain or branched aliphatic hydrocarbon radical of from 1 to 18 carbon atoms wherein one or more of the $-CH_2-$ groups can be replaced with -O-, -S-, -S-S-, -SO-, $-SO_2-$ or $-NR_2-$ and said hydrocarbon radical is optionally substituted with halogen, trihalomethyl, cyano, aryl, hydroxy, alkoxy, nitro or cycloalkyl having 3 to 6 carbon atoms;

$R_2$ is hydrogen or a saturated or unsaturated straight or branched chain aliphatic radical having from 1 to 8 carbon atoms, optionally substituted with halogen, hydroxy, alkoxy, cyano or nitro;

$R_4$ and $R_5$ are independently a saturated or unsaturated, straight or branched chain aliphatic radical having 1 to 8 carbon atoms optionally substituted with halogen, trihalomethyl, alkoxy or cyano; hydrogen or phenyl optionally substituted with halogen, alkyl, alkoxy, trihalomethyl, nitro or cyano;

X is -O-, -S- or $-NR_2-$

L, M and N are each independently hydrogen, hydroxy, halogen, trihalomethyl, nitro, cyano, alkyl or alkoxy having from 1 to 4 carbon atoms and

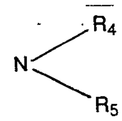

EP 0 141 873 A1

PATENTANWÄLTE
GRÜNECKER · DR. KINKELDEY · DR. STOCKMAIR
DR. SCHUMANN · JAKOB · DR. BEZOLD · MEISTER
HILGERS · DR. MEYER-PLATH
MAXIMILIANSTR. 58 · 8000 MÜNCHEN 22



November 14, 1983
EP 1324 -60/co

# Substituted Diphenyl Ether Herbicides and Process for Use

## Background of the Invention

### 1. Field of the Invention

This invention relates to novel compounds which are selective herbicides of high activity.

### 2. Description of the Prior Art

Certain phenoxybenzoates show herbicidal activity and are disclosed in e.g. U.S. patent Nos. 3,652,645; 3,784,635; 3,798,276; 3,928,416; 3,941,830; 3,979,437; 4,001,005; 4,002,662; 4,046,798; 4,063,929; 4,164,408; 4,164,409; 4,164,410; 4,178,169 and 4,185,995. However, the herbicidal effectiveness and selectivity of a given phenoxybenzoate cannot be predicted from an examination of its chemical structure. Often quite closely related compounds will have significantly different weed control capabilities and crop selectivity.

## SUMMARY OF THE INVENTION

In accordance with the present invention, there is provided novel herbicidal diphenyl ethers having the formula:

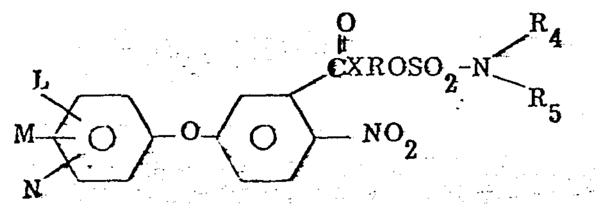

wherein R is a saturated or unsaturated, straight chain or branched aliphatic hydrocarbon radical of from 1 to 18 carbon atoms wherein one or more of the $-CH_2-$ groups can be replaced with -O-, -S-, -S-S-, -SO-, $-SO_2-$ or $-NR_2-$ and said hydrocarbon radical is optionally substituted with halogen, trihalomethyl, cyano, aryl, hydroxy, alkoxy, nitro or cycloalkyl having 3 to 6 carbon atoms;

$R_2$ is hydrogen or a saturated or unsaturated straight or branched chain aliphatic radical having from 1 to 8 carbon atoms, optionally substituted with halogen, hydroxy, alkoxy, cyano or nitro;

$\underline{R_4}$ and $\underline{R_5}$ are independently a saturated or unsaturated, straight or branched chain aliphatic radical having 1 to 8 carbon atoms optionally substituted with halogen, trihalomethyl, alkoxy or cyano; hydrogen or phenyl optionally substituted with halogen, alkyl, alkoxy, trihalomethyl, nitro or cyano;

$\underline{X}$ is -O-, -S- or $-NR_2-$

<u>L, M and N</u> are each independently hydrogen, hydroxy, halogen, trihalomethyl, nitro, cyano, alkyl or alkoxy having from 1 to 4 carbon atoms and

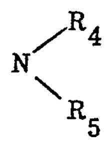 .

Of the above compounds, those wherein L, M and N are chlorine, trifluoromethyl and hydrogen respectively and wherein R is a lower alkylene diradical or an oxyalkylene diradical; X is oxygen or sulfur are preferred.

The novel compounds of the invention have been found to show excellent activity as weed control agents towards crops of major agricultural importance.

Representative examples of the compounds of this invention, embraced within the formula are given in following Table I.

TABLE I

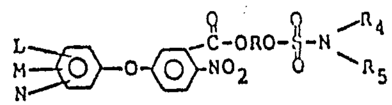

| Compound | L | M | N | R | $R_4$ | $R_5$ |
|---|---|---|---|---|---|---|
| 2-(N,N-Dimethylsulfamoyloxy) ethyl 5-(2-chloro-4-trifluoromethylphenoxy)-2-nitrobenzoate | 2-Cl | 4-$CF_3$ | H | $-CH_2CH_2-$ | $-CH_3$ | $-CH_3$ |
| 5-(N,N-Diethylsulfamoyloxy)-3-oxapentyl 5-(2-chloro-4-trifluoromethylphenoxy)-2-nitrobenzoate | 2-Cl | 4-$CF_3$ | H | $-CH_2CH_2OCH_2CH_2-$ | $-CH_2CH_3$ | $-CH_2CH_3$ |
| 5-(N,N-Diethylsulfamoyloxy)-3-thiapentyl 5-(2-chloro-4-trifluoromethylphenoxy)-2-nitrobenzoate | 2-Cl | 4-$CF_3$ | H | $-CH_2CH_2-S-CH_2CH_2-$ | $-CH_2CH_3$ | $-CH_2CH_3$ |
| 2-(N,N-Dimethylsulfamoyloxy) ethyl 5-(2,4,6-trichlorophenoxy)-2-nitrobenzoate | 2-Cl | 4-Cl | 2-Cl | $-CH_2-CH_2-$ | $-CH_3$ | $-CH_3$ |

TABLE I CONT'D

| Compound | L | M | N | R | $R_4$ | $R_5$ |
|---|---|---|---|---|---|---|
| 8-(N-(3-Chlorophenyl)sulfamoyl) 3,5-dioxaoctyl 5-(2-chloro-4-trifluoromethylphenoxy)-2-nitrobenzoate | 2-Cl | $4-CF_3$ | H | $-CH_2CH_2OCH_2CH_2OCH_2CH_2-$ | H | 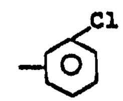 |
| 3-(N-(2-Naphthyl)sulfamoyl) propyl 5-(2-chloro-4-trifluoromethylphenoxy)-2-nitrobenzoate | 2-Cl | $4-CF_3$ | H | $-CH_2CH_2CH_2-$ | H | 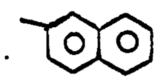 |
| 2-(N,N-Dipropylsulfamoyloxy) ethyl 5-(2-chloro-4-trifluoromethylphenoxy)-2-nitrobenzoate | $2-CF_3$ | $4-CF_3$ | H | $-CH_2CH_2-$ | $-CH_2CH_2CH_3$ | $-CH_2CH_2Cl$ |
| 5-(N,N-Diallylsulfamoyloxy)-3-thiadioxo-pentyl 5-(2-chloro-4-trifluoromethylphenoxy)-2-nitrobenzoate | 2-Cl | $4-CF_3$ | H | 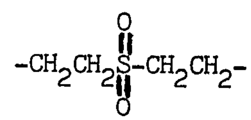 | $-CH_2CH=CH_2$ | $-CH_2CH=CH_2$ |
| 2-(N-isopropylsulfamoyloxy) ethyl 5-(2-chloro-4-trifluoromethylphenoxy)-2-nitrobenzoate | 2-Cl | $4-CF_3$ | H | $-CH_2CH_2-$ | H | 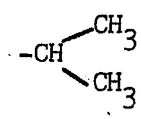 |
| 2-N-(2-chloro-4-cyanophenyl-sulfamoyloxy)ethyl 5-(2-chloro-4-trifluoromethylphenoxy)-2-nitrobenzoate | 2-Cl | $4-CF_3$ | H | $-CH_2CH_2-$ | H | 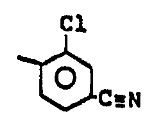 |

The compounds of this invention can be prepared by reacting a phenoxynitrobenzoate having the formula:

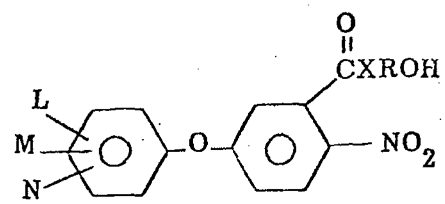

with a sulfamoyl chloride having the formula

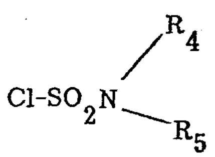 , wherein L, M, N, X, $R_2$, $R_4$ and $R_5$ are as defined above,

at a temperature of between about 0° and about 200°C. under from about 1 to about 5 atmospheres pressure for a period of from about 0.5 to about 20 hours; preferably when W is -OH at a temperature of between about 100° and about 160°C. and when W is halogen, at a temperature between about 20°C. and about 80°C., under atmospheric pressure for a period of from about 1 to about 10 hours.

0141873

Representative examples of phenoxynitrobenzoate compounds include:

2-Hydroxyethyl 5-(2-chloro-4-trifluoromethylphenoxy)-2-nitrobenzoate
4- Hydroxybutyl{5-[2-chloro-4-(trifluoromethyl)phenoxy]-2-nitro} benzoate
6-Hydroxyhexyl {5- [2-chloro-4-(trifluoromethyl)phenoxy]-2-nitro} benzoate
4-Hydroxy-2-buten-1-yl {5-[2-chloro-4-(trifluoromethyl)phenoxy]-2-nitro} benzoate
2-Hydroxyethyl [5-(2,4-dichlorophenoxy)-2-nitro] benzoate
4-Hydroxybutyl [5-(2,4-dichlorophenoxy)-2-nitro] benzoate
4-Hydroxy-2-buten-1-yl [5-(2,4-dichloro)phenoxy-2-nitro] benzoate
4-Hydroxy-2-butyn-1-yl [5-(2,4-dichlorophenoxy)-2-nitro] benzoate
3-Hydroxypropyl{5-[2-chloro-4-(trifluoromethyl)phenoxy]-2-nitro} benzoate
3-Hydroxy-2,2-dimethylpropyl{5-[2-chloro-4-(trifluoromethyl)phenoxy]-2-nitro} benzoate
4-Hydroxy-2-butyn-1-yl{5-[2-chloro-4-(trifluoromethyl)phenoxy] -2-nitro} benzoate
3-Hydroxy-2-butyl{5-[2-chloro-4-(trifluoromethyl)phenoxy]-2-nitro} benzoate
5-Hydroxypentyl{5-[2-chloro-4-(trifluoromethyl)phenoxy]-2-nitro} benzoate
2-Allyl-3-hydroxypropyl{5-[2-chloro-4-(trifluoromethyl)phenoxy]-2-nitro} benzoate
3-Hydroxy-3-methylbutyl{5-[2-chloro-4-(trifluoromethyl)phenoxy]-2-nitro} benzoate
2-Hydroxypropyl{5-[2-chloro-4-(trifluoromethyl)phenoxy]-2-nitro} benzoate
2-Hydroxyethyl{5-[2-chloro-4-(trifluoromethyl)6-nitro] phenoxy-2-nitro} benzoate
2-Hydroxyethyl{5-[2,4-di(trifluoromethyl)phenoxy] -2— nitro} benzoate
2-Hydroxyethyl [5-(2,4-dichloro-6-methyl)phenoxy-2-nitro] benzoate
2-Hydroxyethyl [5-(2-chloro-4-methoxy)phenoxy-2-nitro] benzoate
2-Hydroxyethyl [5-(2-chloro-4-cyano)phenoxy-2-nitro] benzoate
4-Hydroxy-2-butyn-1-yl [5-(2,4-dichloro)phenoxy —2-nitro] benzoate

Suitable sulfamoyl chloride reactants include dimethylsulfamoyl chloride, N-(3-chlorophenyl)-N-methylsulfamoyl chloride, and the like.

The phenoxy nitrobenzoate reactants can be prepared according to the process of copending applications Serial No. 358,974, filed March 17, 1982 and Serial No. 239,286, filed March 2, 1981. The mole ratio of said benzoate to sulfamoyl chloride can vary between about 1:1 and about 1:10. Although stoichiometric amounts are most desirable for the reaction, excess sulfamoyl chloride can serve as a recyclable solvent for the system. While other diluent can be employed if desired such as pyridine, tetrahydrofuran, triethylamine and mixtures thereof, it is to be understood that the reaction can also be carried out in the absence of a diluent. When a solvent is employed, the concentration of the reactant benzoate can vary between about 10 wt. % and about 80 wt. %.

The product of the reaction is recovered by conventional means such as stripping, distillation or precipitation.

The compounds of this invention are useful both as pre-emergent and post-emergent herbicides and are highly selective to crops. Among the crops on which these herbicides may be advantageously employed, are, for example, gramineae including rice, cereal crops, sorghum, corn, wheat and safflower; leguminosae including beans, peas, peanuts, soybeans and lentiles; solanaceae including potato, pepper, tobacco and tomato; curciferae including cabbages and turnips; malvaceae including cotton; umbelliferae including carrots and parsley and Liliaceae including onion, scallion, and shallot. Cheet grass, foxtail, barnyard grass, curled dock, yellow rocket, chickweed, pigweed, lambsquarter, morning glory, Japanese millet, crabgrass, ragweed, cocklebur, velvet leaf, coffee weed, wild mustard and black mustard are among the weed species controlled by the present herbicides. Accordingly, the novel substituted diphenyl ethers of this invention are broad spectrum herbicides.

The herbicides of this invention may be applied in any amount which will give the required control of weeds depending on the type of weed and degree of infestation. A preferred rate of application of the benzoates is from 0.05 to 8 lbs. per acre. In practical application, the compounds may be applied in solid, liquid or in vaporized form, or, as it is generally done, as an active ingredient in a standard herbicidal composition or formulation which comprises a carrier. A generally accepted carrier is a substance which can be used to dissolve, disperse or diffuse the herbicidal components in the composition. Non-limiting examples of liquid carriers include water, organic solvents such as alcohols, ketones, halogenated hydrocarbons, aromatic hydrocarbons, ethers, amides, esters, nitriles, mineral oils, palm oil and the like. Non-limiting examples of solid carriers include Kaolin, bentonite, talc, diatomaceous earth, vermiculite, clay, gypsum, grain and seed hulls, ground corn cobs and the like. In addition to a carrier, it is usually desirable to add to the herbicidal formulation additives such as emulsifying agents, wetting agents, binding agents, stabilizer and the like or thickeners as desired for particular weather conditions or applications. The compounds may be formulated, for example, as a dust, wettable powders, paste, emulsifiable concentrates, granular formulations or as liquids or aerosols.

The phenoxybenzoates of this invention may be applied along with plant growth regulators, insecticides, fungicides, nematocides and fertilizers. They may be applied in combination with one or more other herbicides. Non-limiting examples of other herbicides which can be incorporated with the phenoxybenzoates of this invention are anilides, such as N-methoxymethyl (2,6-diethylphenyl) chloroacetamide; dinitroanilines, such as $\alpha,\alpha,\alpha$-trifluoro-2,6-dinitro-N,N-di-propyl-p-toluidine; carboxylic acids and derivatives; triazines; substituted ureas; carbamates; thiocarbamates; uracils; heterocycles and organo phosphorous compounds.

Reference is now had to the following examples which illustrate preferred embodiments of the invention set forth herein. It is to be understood, however, that these examples should not be construed as limiting to the scope of the invention as more broadly defined herein above and in the following claims.

EXAMPLE I

Preparation of 2-(N,N-dimethylsulfamoyloxy)ethyl 5-(2-chloro-4-trifluoromethylphenoxy)-2-nitrobenzoate

Dimethylsulfamoyl chloride (7.2 g, 0.05 mole) was added dropwise to a solution of 2-hydroxyethyl 5-(2-chloro-4-trifluoromethylphenoxy)-2-nitrobenzoate (10 g, 0.025 mole), triethylamine (10 ml) and ethyl ether (200 ml). The mixture was heated to and held at reflux for 5 hrs., cooled, added 200 ml of ether and washed three times with water. The ethereal solution was dried over $MgSO_4$, concentrated to 13.9 g of yellow gum. The gummy material was run through a silica gel with 30% acetone - 70% cyclohexane as eluent to afford 3.0 g of pure 2-(N,N-dimethylsulfamoyloxy) ethyl 5-(2-chloro-4-trifluoromethylphenoxy)-2-nitrobenzoate as colorless gum; nmr ($CDCl_3$) 2.96 (S, 6H), 3.84 (m, 2H), 4.52 (m, 2H), 6.88-8.24 (m, 6H).

Other compounds of this type are also prepared according to this example by proper substitution of the dimethylsulfamoyl chloride reactant. For instance 2-(N,N-diethylsulfamoyloxy)ethyl 5-(2-chloro-4-trifluoromethylphenoxy)-2-nitrobenzoate is prepared by substituting diethylsulfamoyl chloride; N-(3-chlorophenyl)-N-methylsulfamoyloxy ethyl 5-(2-chloro-4-trifluoromethylphenoxy)-2-nitrobenzoate; is prepared by substituting N-(3-chlorophenyl-N-methyl sulfamoyl chloride; etc.

HERBICIDAL TESTS

The compound of Example 1 was tested for herbicidal activity and the results of these tests are reported as follows.

EXAMPLE 2

Tests were made on two flats seeded with species of representative monocotyledonous and dicotyledonous plants. The test chemical was applied to one such flat immediately after it was seeded. The other flat contained plants on which the first true leaves had developed before the chemical was applied. The response was rated 12 to 21 days after treatment on a scale of 0 to 9 where 0 represents no injury and 9 represents complete kill.

The following results are reported in Tables II and III.

TABLE II

Herbicidal Effectiveness of Post-Emergence Application (at 10 lbs./acre)

| Compound of Example No. | MNGTY | MSTD | FOX | JPN | CRB | PIG |
|---|---|---|---|---|---|---|
| 1 | 9 | 9 | 9 | 9 | 9 | 9 |

TABLE III

Herbicidal Effectiveness of Pre-Emergence Application

| Compound of Example No. | MNGTY | MSTD | FOX | JPN | CRB | PIG |
|---|---|---|---|---|---|---|
| 1 | 9 | 9 | 9 | 9 | 9 | 9 |

Activity in Tables II and III is rated on a scale of 0-9, i.e. from no visible effect on foliage or plant emergence to 100% destruction.

EXAMPLE 3

Again, tests were made on two flats seeded with species of representative monocotyledonous and dicotyledonous plants. The test chemical was applied to one such flat immediately after it was seeded. The other flat contained plants on which the first true leaveshad developed before the chemical was applied. The response was rated 12 to 21 days after treatment on a scale of 0 to 9 where 0 represents no injury and 9 represents complete kill.

The results are shown in the following Tables IV and V.

TABLE IV

Post Emergence Herbicidal Activity & Crop Tolerance

| PLANT | Compd. of Ex. 1 (Dosage in lb./acre) | | |
|---|---|---|---|
| | 4 | 2 | 1 |
| Morning Glory | 9 | 9 | 9 |
| Mustard | 9 | 9 | $7^{S+}$ |
| Yellow Foxtail | 6 | 6 | 3 |
| Japanese Millet | $6^{S}$ | 4 | 0 |
| Crabgrass | 9 | 9 | $6^{S+}$ |
| Pigweed | 9 | 9 | 9 |
| Cocklebur | $8^{S+}$ | 9 | $8^{S+}$ |
| Velvet Leaf | 9 | 9 | 9 |
| Hemp Sesbania | 9 | 9 | 9 |
| Lambsquarters | 9 | 9 | 9 |
| Soybean | | 4 | |
| Corn | | 0 | |
| Rice | | 2 | |

TABLE V

Pre Emergence Herbicidal Activity & Crop Tolerance

| PLANT | Compd. of Ex. 1 (Dosage in lb./acre) | | |
|---|---|---|---|
| | 4 | 2 | 1 |
| Morning Glory | 4 | 5 | 3 |
| Mustard | 9 | $6^S$ | 2 |
| Yellow Foxtail | $8^{S+}$ | $7^S$ | 4 |
| Japanese Millet | $8^S$ | $5^S$ | 3 |
| Crabgrass | 9 | 9 | 9 |
| Pigweed | 9 | 9 | 9 |
| Cocklebur | $8^{S+}$ | $8^{S+}$ | 9 |
| Velvet Leaf | $8^{S+}$ | $8^{S+}$ | $8^{S+}$ |
| Hemp Sesbania | 9 | 9 | 9 |
| Lambsquarters | 9 | 9 | 9 |
| Cotton | | $3^S$ | |
| Soybean | | 3 | |
| Corn | | 4 | |
| Wheat | | $6^S$ | |
| Rice | | 2 | |

In the above Tables IV and V, S = stunting; $S^+$ = severe stunting

EXAMPLE 4

Crop Selectivity

This example shows the crop selectivity of various types of the substituted m-phenoxybenzoates of this invention as compared to a commercial h erbicide (Blazer ®,

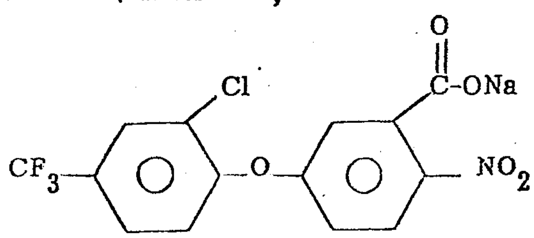

) on

a number of agronomic crops. Following the general test procedure of Examples 2 and 3, aqueous solutions of the m-phenoxybenzoates are evaluated for significant tolerance towards important crops. The results of these tests are as reported in Table VI.

TABLE VI

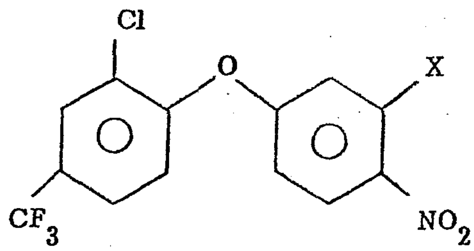

Selectivity in Post-Emergence Herbicidal Tests (at 2 lb./acre)

| Compound of Ex. | X | Plant Injury* Corn | Soybean | Rice |
|---|---|---|---|---|
| 1 | 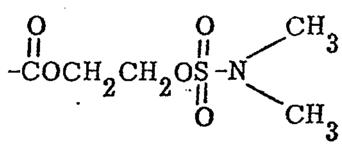 | 0 | 4 | 2 |
| Comparative | 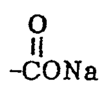 | 9 | $4^{S}$ | $8^{S+}$ |

Selectivity in Pre-Emergence Herbicidal Tests (at 2 lb./acre)

| Compound of Ex. | X | Plant Injury* Corn | Soybean | Rice |
|---|---|---|---|---|
| 1 | Same as Above | 4 | 3 | 2 |
| Comparative | Same as Above | 5 | 9 | $7^{S}$ |

* Rated on scale of 0 to 9, from no visible effect on foliage to 100% destruction; with S = moderate stunting and S+ = severe stunting.

In summary, the compounds of this invention show high pre- and post-emergence herbicidal activity against indicator weeds, and are particularly effective against broadleaf weeds, such as morning glory. In addition to such effective herbicidal activity, they exhibit an unusual selectivity against important agronomic crops, such as corn, wheat, soybean and rice.

While the invention has been described with particular reference to certain embodiments thereof, it will be understood that certain modifications and changes may be made which are within the skill of the art. Therefore it is intended to be bound only by the appended claims.

WHAT IS CLAIMED IS:

1. A . . compound having the formula

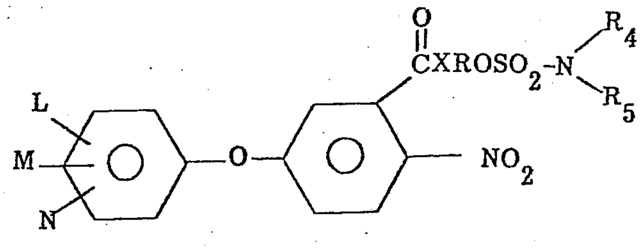

wherein R is a saturated or unsaturated, straight chain or branched aliphatic hydrocarbon radical of from 1 to 18 carbon atoms wherein one or more of the $-CH_2-$ groups can be replaced with -O-, -S-, -S-S-, -SO-, $-SO_2-$ or $-NR_2-$ and said hydrocarbon radical is optionally substituted with halogen, trihalomethyl, cyano, aryl, hydroxy, alkoxy, nitro or cycloalkyl having 3 to 6 carbon atoms;

$R_2$ is hydrogen or a saturated or unsaturated straight or branched chain aliphatic radical having from 1 to 8 carbon atoms, optionally substituted with halogen, hydroxy, alkoxy, cyano or nitro;

$R_4$ and $R_5$ are independently a saturated or unsaturated, straight or branched chain aliphatic radical having 1 to 8 carbon atoms optionally substituted with halogen, trihalomethyl, alkoxy or cyano; hydrogen or phenyl optionally substituted with halogen, alkyl, alkoxy, trihalomethyl, nitro or cyano;

X is -O-, -S- or $-NR_2-$

L, M and N are each independently hydrogen, hydroxy, halogen, trihalomethyl, nitro, cyano, alkyl or alkoxy having from 1 to 4 carbon atoms and

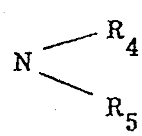

2. The compound of Claim 1 which is 2-(N,N-dimethylsulfamoyloxy)ethyl 5-(2-chloro-4-trifluoromethylphenoxy)-2-nitrobenzoate.

3. A herbicidal composition comprising an effective amount of a compound of Claim 1 and an inert carrier.

4. A process for controlling undesirable plant growth which comprises applying to the plant or plant situs a growth controlling amount of the herbicidal compound of Claim 1.

5. The process of Claim 4 wherein the herbicidal compound is applied at a rate of between about 0.05 and about 8 pounds per acre.

6. The process ofClaim 4 wherein the herbicidal compound is applied in combination with an inert carrier as a liquid spray.

7. The process of Claim 4 wherein herbicidal compound is applied in combination with an inert solid carrier as a dust or granulated mixture.

8. The process of Claim 4 wherein the compound of Claim 1 is applied as a post emergent treatment.

9. The process of Claim 4 wherein the compound of Claim 1 is applied as a pre emergent treatment.

0141873

European Patent Office

# EUROPEAN SEARCH REPORT

Application number

EP 83 11 1382

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | GB-A-2 103 610 (RHONE-POULENC) * Claims * | 1-9 | C 07 C 143/86<br>A 01 N 41/00 |
| | ----- | | |
| | | | **TECHNICAL FIELDS SEARCHED (Int. Cl. 3)** |
| | | | C 07 C 143/00 |

The present search report has been drawn up for all claims

| Place of search | Date of completion of the search | Examiner |
|---|---|---|
| THE HAGUE | 28-06-1984 | GAUTIER R.H.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document